# EUROPÄISCHE PATENTSCHRIFT

(11) **EP 3 308 056 B1**
(45) Veröffentlichungstag und Bekanntmachung des Hinweises auf die Patenterteilung: **16.09.2020**
(21) Anmeldenummer: 16728928.9
(22) Anmeldetag: 08.06.2016
(51) Int. Cl.: F16H 59/10, F16H 59/04, F16H 59/02

(54) **VORRICHTUNG ZUR ERFASSUNG DER POSITION EINES FAHRSTUFENWÄHLHEBELS, KRAFTFAHRZEUG**
DEVICE FOR DETECTING THE POSITION OF A GEAR STEP SELECTOR LEVER
DISPOSITIF DE DÉTECTION DE POSITION D'UN LEVIER DE SÉLECTION DE VITESSES, VÉHICULE AUTOMOBILE

(30) Priorität: 09.06.2015 DE 102015109104
(43) Veröffentlichungstag der Anmeldung: 18.04.2018
(73) Patentinhaber: Küster Holding GmbH, 35630 Ehringshausen (DE)
(72) Erfinder: BRÜCK, Joachim, 35644 Hohenahr (DE); NICODEMUS, Michael, 35745 Herborn (DE); EICHENAUER, Tobias, 35622 Lahnau (DE); SCHIRMER, Heiko, Regesbostel 21649 (DE); PÄTZOLD, Wolfgang, 37154 Northeim (DE); VORLÄNDER, Evelyn, 35745 Herborn (DE); KREMER, Viktor, 35444 Biebertal (DE)
(74) Vertreter: Müller, Eckhard
(86) Internationale Anmeldenummer: PCT/EP2016/063073
(87) Internationale Veröffentlichungsnummer: WO 2016/198476

(56) Entgegenhaltungen:
- JP-A- 2007 062 664
- US-A1- 2004 035 237
- US-A1- 2008 041 182
- US-A1- 2010 294 067

## Beschreibung

Die Erfindung betrifft eine Vorrichtung zur Erfassung der Position eines Fahrstufenwählhebels zur Wahl einer Fahrstufe bzw. einer Getriebeeinstellung eines Kraftfahrzeuges. Die Vorrichtung weist einen am Fahrstufenwählhebel angeordneten Signalgeber und einen zum Signalgeber beabstandet angeordneten Signalempfänger auf, wobei eine unterschiedliche relative Lage zwischen Signalgeber und Signalempfänger bei verschiedenen Fahrstufen bzw. Getriebeeinstellungen erfassbar ist. Die Erfindung betrifft weiterhin ein Kraftfahrzeug mit einer entsprechenden Vorrichtung.

Vorrichtungen der eingangs genannten Art sind im Stand der Technik bekannt. Die Betätigung von Automatikgetrieben sowie automatisierten Schaltgetrieben von Kraftfahrzeugen erfolgt typischerweise ohne unmittelbare mechanische Kopplung zwischen Fahrstufenwählhebel und Getriebe. Bei diesen sogenannten "Shift-by-Wire"-Systemen wird die Position des Fahrstufenwählhebels detektiert und aus der jeweiligen Position des Fahrstufenwählhebels eine gewünschte Fahrstufe bzw. eine Getriebeeinstellung bestimmt, die in der Folge zum Beispiel durch Hilfsmotoren im Getriebe eingestellt wird.

Aus der DE 10 2009 015 883 A1 ist eine Vorrichtung zur Erfassung der Position eines Fahrstufenwählhebels bekannt. Ein Sensor zur Erfassung der relativen Lage eines am Fahrstufenwählhebel angeordneten Magneten ist in drei Dimensionen ausgebildet. Der Sensor ist als 3D-Hallsensor ausgebildet. Der Fahrstufenwählhebel ist zweifach schwenkbar in einem Lagerrahmen angeordnet. Eine Nord-Süd-Achse des Magneten ist paarweise senkrecht zu den Schwenkachsen ausgebildet. Bei einer Bewegung des Fahrstufenwählhebels dreht sich das von dem Magneten ausgehende Magnetfeld zusammen mit dem Magneten. Der Hallsensor registriert diese Änderung des Magnetfeldes. Aus der Stärke des Magnetfeldes sowie der Richtung des Magnetfeldes lässt sich die Lage des Fahrstufenwählhebels eindeutig bestimmen.

Aus der DE 192 31 015 A1 ist eine Vorrichtung zum Übersetzen einer zweiachsigen Schwenkbewegung eines Schalthebels in eine planare Bewegung eines Schalthebelpositionsgebers bekannt. Eine erste Schwenkachse des Schalthebels wird von einem Lagerbolzen gebildet. An zwei sich gegenüber liegenden Stellen der Halterung sind zwei weitere Bolzen angebracht, deren Symmetrieachse eine gemeinsame zweite Schwenkachse für den Schalthebel bildet. Ein Schalthebelpositionsgeber ist durch einen Gelenkkörper mit einer Montageaufnahme gebildet, in welcher ein Aktuator angebracht ist. Eine gattungsgemäße Vorrichtung ist aus der US2008/0041182 bekannt.

Nachteilig beim Stand der Technik ist, dass der Magnet beim Verschwenken des Fahrstufenwählhebels eine Bewegung entlang eines Kreisbogens ausführt. Das Magnetfeld des auf dem Kreisbogen bewegten Magneten ist insbesondere im Randbereich der Bewegung schwach. Daher werden die Komponenten der Richtungsvektoren des Magnetfeldes durch den Sensor unpräzise detektiert, was zu fehlerhafter Erkennung der Position des Fahrstufenwählhebels führt.

Davon ausgehend liegt der Erfindung die Aufgabe zugrunde, eine Vorrichtung der eingangs genannten Art dahingehend zu verbessern, dass die Erfassung der Position eines Fahrstufenwählhebels präzise und mit großer Zuverlässigkeit erfolgt. Die Aufgabe wird gelöst durch eine Vorrichtung mit den Merkmalen des Anspruches 1 sowie durch ein Kraftfahrzeug mit den Merkmalen des Anspruches 11. Vorteilhafte Ausgestaltungen der Erfindung sind Gegenstand der jeweiligen Unteransprüche.

Eine erfindungsgemäße Vorrichtung zur Erfassung der Position eines Fahrstufenwählhebels für die Wahl einer Getriebeeinstellung eines Kraftfahrzeuges weist mindestens einen am Fahrstufenwählhebel angeordneten Signalgeber und mindestens einen zum Signalgeber beabstandet angeordneten Signalempfänger auf. Die relative Lage zwischen Signalgeber und Signalempfänger bei verschiedenen wählbaren Fahrstufen ist unterschiedlich und durch Signalgeber und Signalempfänger erfassbar.

Im Sinne der vorliegenden Erfindung ist unter einem Fahrstufenwählhebel jede Vorrichtung zu verstehen, die manuell betätigbar ist, und mit deren Hilfe wenigstens zwei unterschiedliche Fahrstufen eines Getriebes des Kraftfahrzeuges wählbar sind. Dabei die spielt die Art des Getriebes für die Erfindung keine Rolle. Das Getriebe kann ein Automatikgetriebe oder ein automatisiertes Schaltgetriebe sein, ebenso aber auch ein gewöhnliches Schaltgetriebe.

Erfindungsgemäß ist vorgesehen, dass der Signalgeber bei Betätigung des Fahrstufenwählhebels zum Umschalten von einer Schaltgassenfunktion in eine Tippgassenfunktion oder umgekehrt im Wesentlichen nur eine translatorische Bewegung relativ zum Signalempfänger ausübt. Dies ist besonders deshalb vorteilhaft, da die vom Signalgeber, beispielsweise von einem Magneten, ausgegebenen Signale bzw. die Richtungsvektoren des Magnetfeldes, bei einer translatorischen Bewegung relativ zum Signalempfänger zuverlässig vom Empfänger erkannt und somit weiterverarbeitet werden.

Bei den bekannten Systemen führt der Magnet beim Verkippen des Fahrstufenwählhebels eine Bewegung entlang eines Kreisbogens aus, was dazu führt, dass insbesondere im äußeren Messbereich die Richtungsvektoren eines sehr schwachen Magnetfeldes auf den Signalempfänger treffen können. Dies führt in der Folge zu fehlerhaften Detektionen und somit zur falschen Positionsbestimmung des Fahrstufenwählhebels. Erfindungsgemäß wird dieses Problem vermieden, dadurch sind zuverlässige und damit sichere Schaltvorgänge gewährleistet.

Eine erste Weiterbildung der Erfindung sieht vor, dass der Signalgeber in einer Linearführung verschiebbar geführt ist. Dadurch ist eine exakt gerichtete Führung des Signalgebers gegeben, und es kann eine präzise Detektion der Signale durch den Signalempfänger erfolgen. Insbesondere ist es beispielsweise bei der Verwendung eines Magneten als Signalgeber ermöglicht, die Komponenten des Magnetfeldes als Signal zu wählen, welche exakt detektiert werden können. Ungenaue Messungen oder sogar der Ausfall der Detektion aufgrund zu schwacher oder sogar fehlender Signale können vermieden werden.

Nach einer alternativen Ausführungsform ist für die Übertragung der Bewegung des Fahrstufenwählhebels auf den Signalgeber ein Betätigungselement vorgesehen, welches am Fahrstufenwählhebel außerhalb seiner Kippachse angreift. Durch die Bewegung des Fahrstufenwählhebels wird über das Betätigungselement die relative Lage zwischen Signalgeber und Signalempfänger verändert. Es findet die Umwandlung einer Kippbewegung des Fahrstufenwählhebels in eine translatorische Bewegung des Signalgebers statt. Das Betätigungselement bewirkt eine präzise translatorische Bewegung des Signalgebers. Das Angreifen des Betätigungselementes außerhalb der Kippachse des Fahrstufenwählhebels gewährleistet eine präzise Messung, da schon bei kleinen Kippbewegungen des Wählhebels aufgrund des übersetzend wirkenden Angreifens des Betätigungselementes ein größerer Hub und somit eine deutliche translatorische Bewegung des Signalgebers stattfinden, wodurch exakt messbare Änderungen des Signals, insbesondere eines Magnetfeldes, erzielt werden.

Konstruktiv und montagetechnisch besonders vorteilhaft ist es, wenn der Signalgeber in einer Aufnahme aufgenommen ist, welche mit dem Betätigungselement wirkverbunden ist. Die Aufnahme kann beispielsweise als Käfig ausgebildet sein.

In einer Weiterbildung der Erfindung ist der Signalgeber in das Betätigungselement integriert. Beispielsweise kann der Signalgeber an das Betätigungselement angespritzt oder von einem Teil des Betätigungselementes umspritzt sein. Dies erfolgt z.B. als Kunststoffspritzgussteil in der Insert oder Outsert Technologie.

Durch die Ausgestaltung der Aufnahme als Käfig wird eine Gewichtsreduktion der Bauteile bei gleichzeitig stabiler Ausführung erreicht, was insbesondere im Kraftfahrzeugbereich eine zentrale Rolle für die Einsparung von Treibstoff und/oder elektrischer Energie beim Betreiben des Kraftfahrzeuges spielt.

Gemäß einer Weiterbildung der Erfindung ist die Linearbewegung des Signalgebers durch zwei Anschläge begrenzt, welche vor mechanischer Überbelastung der Vorrichtung schützen. Denn der Verfahrweg des Signalgebers ist begrenzt und es kann somit auch bei einer heftigen Bewegung des Fahrstufenwählhebels nicht zu einer mechanischen Überbelastung der beanspruchten Bauteile kommen.

Nach einer alternativen Ausführungsform kann vorgesehen sein, dass der Signalgeber federnd in der Aufnahme bzw. in dem Käfig aufgenommen ist. Denn bei einer Verschiebung des Signalgebers gegen eine elastische Rückstellkraft ist ein Schutz vor mechanischer Überbelastung gegeben. Ohne eine solche federnde Aufnahme kann der Signalgeber ungebremst gegen die Anschläge bewegt werden, wodurch sowohl der Signalgeber selbst als auch die damit wechselwirkenden Bauteile mechanisch stark belastet werden, was zu hoher Beanspruchung und damit zu einer verkürzten Lebensdauer bis hin zur Zerstörung der Teile führen kann.

Nach einer weiteren alternativen Ausführungsform ist vorgesehen, dass für eine Schwenkbewegung senkrecht zur Kippachse des Fahrstufenwählhebels die Aufnahme für den Signalgeber zylindrisch ausgebildet ist, wobei die Zylinderachse mit der Schwenkachse für die Schwenkbewegung des Fahrstufenwählhebels zusammenfällt. Die Vorrichtung zur Erfassung der Position des Fahrstufenwählhebels kann derart ausgebildet sein, dass bei einer Schwenkbewegung des Wählhebels in Fahrzeuglängsrichtung entlang der Schwenkachse ein Herauf- oder Herunterschalten der einzelnen Gänge (P, N, R, D) per Hand erreicht werden kann. Bei einer Kippbewegung entlang der Kippachse kann eine Umschaltung von einer Schaltgassenfunktion in eine Tippgassenfunktion oder umgekehrt zum Herauf- und Herunterschalten der einzelnen Gänge erreicht werden. Es kann alternativ auch vorgesehen sein die Funktionen in entsprechend umgekehrter Richtung zum Fahrzeug zu schalten.

Durch die symmetrische Ausgestaltung der Aufnahme als Zylinder ist es möglich, dass die Symmetrie-/Zylinderachse und die Schwenkachse zusammenfallen, wodurch eine kompaktere Baugröße erreicht und die Montage der Vorrichtung stark vereinfacht wird, was zu Kosteneinsparung bei der Herstellung führt.

In einer Weiterbildung der Erfindung ist vorgesehen, dass für eine leichtgängige Schwenkbewegung des Fahrstufenwählhebels senkrecht zur Kippachse mindestens ein Lager vorgesehen ist.

Konstruktiv und montagetechnisch besonders vorteilhaft ist es, dass nach einer alternativen Ausführungsform das mindestens eine Lager durch die Lagerung der Aufnahme gebildet ist. Durch die Doppelfunktion als Aufnahme für den Signalgeber und als Lager können Herstellungskosten und das Gesamtgewicht der Vorrichtung reduziert werden.

Nach einer weiteren Ausführungsform der Erfindung erfolgt die Rückführung des Fahrstufenwählhebels von einer geschwenkten Stellung in eine Stellung für den normalen Fahrbetrieb vermittels federelastischer Elemente an der Aufnahme.

Im Sinne der Erfindung liegen auch sogenannte monostabile Fahrstufenwählhebel, welche nachfolgend einer Auslenkung, beispielsweise aufgrund elastischer Rückstellelemente, in eine monostabile Lage zurückgeführt werden.

Ein unabhängiger Gedanke der Erfindung betrifft ein Kraftfahrzeug mit einer Vorrichtung gemäß der zuvor beschriebenen Erfindung.

Ein weiterer unabhängiger Gedanke der Erfindung besteht darin, dass die gesamte Schaltvorrichtung um 180° gedreht in einem Fahrzeug, insbesondere in einem Rechtslenker Fahrzeug, eingebaut werden kann. Dabei bleiben die Funktion und die Bedienung bzgl. der Umschaltfunktion zwischen einer Haupt- oder Schaltgasse und der Tippgasse erhalten.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung.

Es zeigen:
- Fig. 1: eine mögliche Ausführungsform einer erfindungsgemäßen Vorrichtung in perspektivischer Ansicht mit einem Fahrstufenwählhebel in Normalstellung;
- Fig. 2: die Vorrichtung gemäß Fig. 1 mit einem Fahrstufenwählhebel in ausgelenkter Stellung;
- Fig. 3: eine Stellung eines Signalgebers in perspektivischer Ansicht;
- Fig. 4: eine weitere Stellung des Signalgebers gemäß Fig. 3;
- Fig. 5: eine weitere Ausführungsform der erfindungsgemäßen Vorrichtung in perspektivischer Ansicht mit einem Fahrstufenwählhebel
- Fig. 6: eine Detailansicht gemäß der Ausführungsform nach Fig. 5 und
- Fig. 7: eine Detailansicht des Betätigungselements gemäß einer alternativen Ausführungsform.

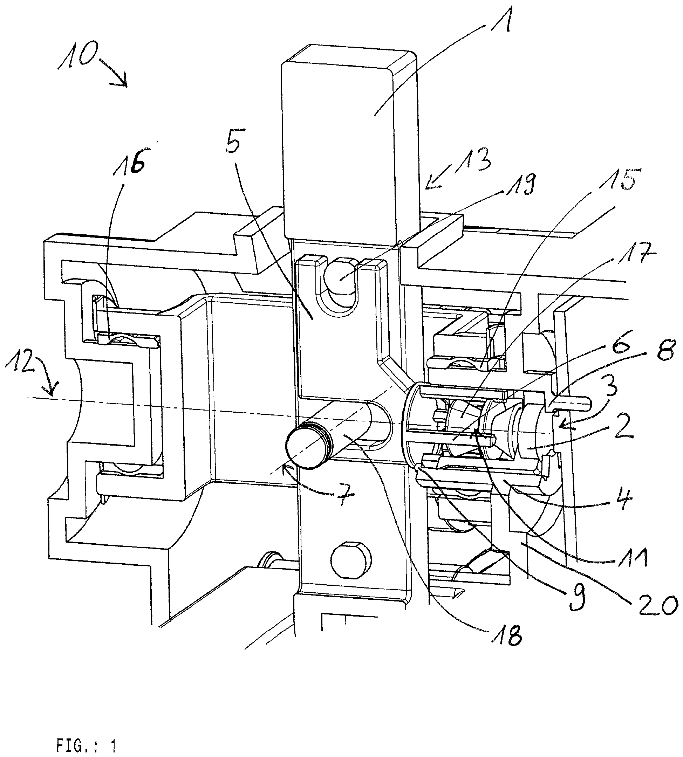

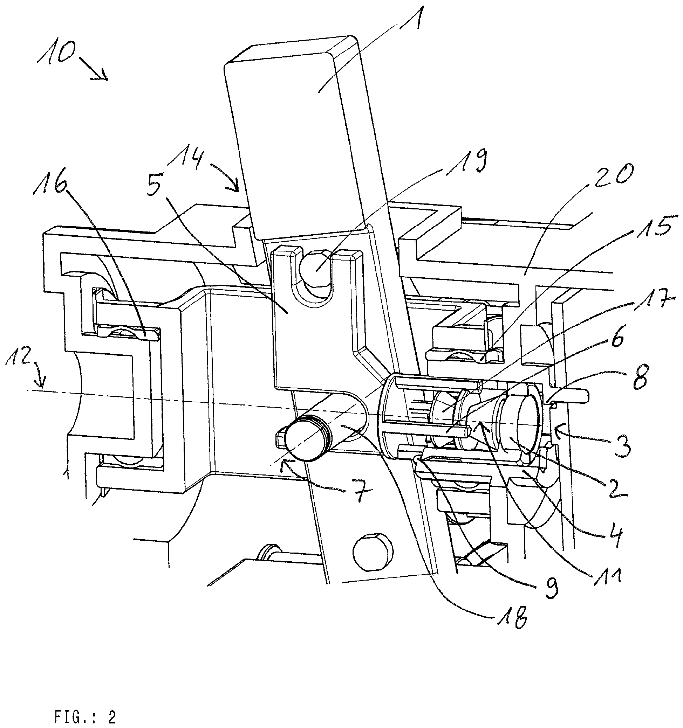

Nachfolgend wird ein Ausführungsbeispiel der Erfindung beschrieben. Figur 1 zeigt eine mögliche Ausführungsform einer erfindungsgemäßen Vorrichtung zur Erfassung der Position eines Fahrstufenwählhebels 1, wobei sich der Wählhebel 1 in einer Normalstellung 13, das heißt in einer Stellung für den normalen Fahrbetrieb, befindet. Figur 2 zeigt die entsprechende Darstellung für den Wählhebel 1, der sich in einer ausgelenkten Stellung 14 befindet.

Der Fahrstufenwählhebel 1 ist in einer nicht dargestellten Kulisse geführt und dient der Wahl unterschiedlicher Fahrstufen. Die Kulisse kann eine sequenzielle Anordnung der unterschiedlichen Fahrstufen vorsehen und eine zweite Fahrstufenwähl- bzw. Schaltgasse aufweisen.

Der Fahrstufenwählhebel 1 ist zweifach schwenkbar in einem Lagerrahmen gelagert. Bei einer Kippbewegung des Wählhebels 1 in Fahrzeugquerrichtung um die Kippachse 7 kann die Funktion des Getriebes von einer Schaltgassenfunktion zur Umschaltung der Schaltstufen (P, N, R, D) in eine Tippgassenfunktion oder umgekehrt zum Herauf- oder Herunterschalten der einzelnen Gänge per Hand umgeschaltet werden. Ein Bewegen des Fahrstufenwählhebels 1 in der Tippgassenfunktion erfordert ein Schwenken um eine Schwenkachse 12 in Fahrzeuglängsrichtung. Es kann alternativ auch vorgesehen sein, die Funktionen in entsprechend umgekehrter Richtung zum Fahrzeug zu schalten.

Zur Bestimmung der Position des Fahrstufenwählhebels 1 sind mindestens ein Signalgeber 2 und mindestens ein Signalempfänger 3 vorgesehen. Der Signalgeber 2 ist bei dem hier gewählten Ausführungsbeispiel als Permanentmagnet und der Signalempfänger 3 als Hallsensor ausgebildet, welcher eine Messung des Magnetfeldes des Magneten 2 ermöglicht. Selbstverständlich kann der Signalgeber beispielsweise auch als Elektromagnet ausgebildet sein.

Der Magnet 2 ist in einer als Käfig 6 ausgebildeten Aufnahme aufgenommen, welche in einer Linearführung 4 der Vorrichtung 10 verschiebbar geführt ist. Die Linearführung 4 ist in einem Gehäuse 20 des Fahrstufenwählhebels 1 angeordnet. Der Käfig 6 ist mit einem Betätigungselement 5 wirkverbunden, welches am Fahrstufenwählelement 1 angelenkt ist.

Ein Bewegen des Fahrstufenwählhebels 1 zum Auswählen einer Fahrstufe erfordert ein Schwenken um eine Kipp 7 - oder Schwenkachse 12. Aufgrund der Kopplung zwischen dem im Käfig 6 angeordneten Magneten 2 mit dem Betätigungselement 5 wird der Magnet 2 bei einem Kippen des Fahrstufenwählhebels 1 um die Kippachse 7 in der Linearführung 4 verschoben. Dadurch wird der Abstand zwischen dem Magnet 2 und dem Hallsensor 3 geändert. Das von dem Magnet 2 ausgehende Magnetfeld bewegt sich zusammen mit dem Magneten 2 linear. Der Hallsensor 3 registriert diese Änderung des Magnetfeldes, wodurch die Position des Fahrstufenwählhebels 1 zuverlässig und präzise bestimmt wird.

Bei einer diametralen Magnetisierung des Magneten 2 ist aufgrund der paarweisen Anordnung des Nord- und des Südpols des Magneten 2 in Richtung der translatorischen Verschiebeachse das vom Magneten 2 ausgehende Magnetfeld in Richtung der Linearverschiebung stärker als beispielsweise bei einer Bewegung entlang eines Kreisbogens, wie bei den bekannten Vorrichtungen.

Bei einer Bewegung des Fahrstufenwählhebels 1 entlang der Schwenkachse 12 wird der Magnet 2 geschwenkt bzw. führt eine Rotationsbewegung aus und, resultierend aus dieser Bewegung, schwenkt auch das von dem Magneten 2 ausgehende Magnetfeld zusammen mit dem Magneten 2.

Zusätzlich ist es möglich, dass nicht nur eine Bewegung des Fahrstufenwählhebels 1 in Fahrzeugquerrichtung, sondern auch eine Schwenkbewegung des Wählhebels 1 um die Schwenkachse 12, in dem hier gewählten Beispiel in Fahrzeuglängsrichtung, stattfindet. Beim Schwenken des Wählhebels 1 um die Schwenkachse 12 bewegen sich der Magnet 2 und das von diesem ausgehende Magnetfeld entlang eines Kreisbogens. Der Hallsensor 3 registriert auch diese Änderung. Die Position des Fahrstufenwählhebels 1 ist dadurch exakt bestimmbar.

Nach der Erfindung ist es bei komplexeren Bewegungen des Fahrstufenwählhebels 1 auch denkbar, diesen sowohl um die Kippachse 7 als auch um die Schwenkachse 12 zu schwenken. Auch durch diese Bewegungen ändert sich das vom Magnet 2 ausgehende Magnetfeld und diese Änderung wird vom Hallsensor registriert, wodurch die Lage des Fahrstufenwählhebels 1 eindeutig bestimmbar ist.

Für eine leichtgängige Kippbewegung des Fahrstufenwählhebels 1 um die Schwenkachse 12 ist mindestens ein Lager 15 vorgesehen. Vorzugsweise ist der Wählhebel 1 mit zwei Lagern 15, 16 für eine Bewegung entlang der Schwenkachse 12 ausgestaltet. Mindestens das eine Lager 15 ist durch die Lagerung des Käfigs 6 gebildet.

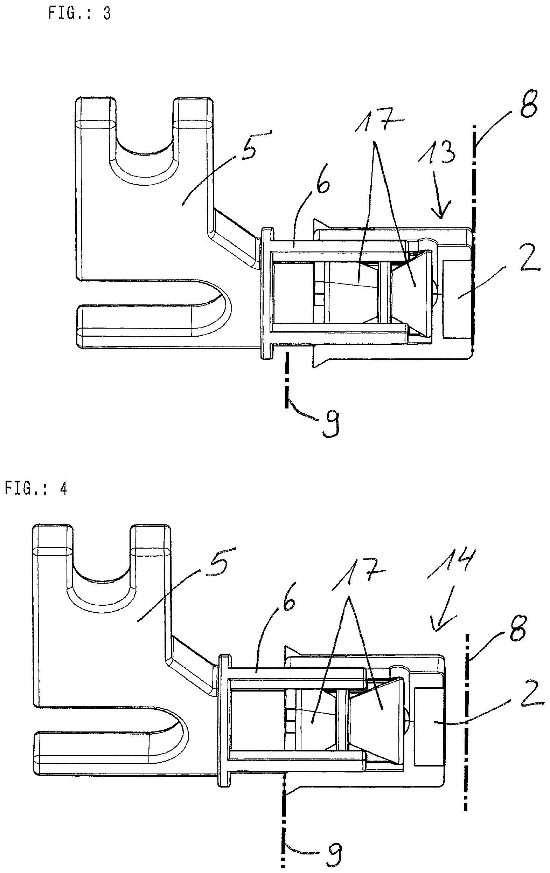

Wie den Figuren 3 und 4 zu entnehmen ist, sind Anschläge 8 und 9 im Gehäuse der Vorrichtung 10 vorgesehen, welche die Vorrichtung vor Beschädigung durch unsachgemäßen Gebrauch des Fahrstufenwählhebels 1 schützen.
Es können darüber hinaus federelastische Elemente 17 in dem Käfig 6 vorgesehen sein, welche den Magneten 2 sicher halten und ebenfalls vor mechanischen Überbelastungen durch zu heftige bzw. unsachgemäße Bewegungen des Fahrstufenwählhebels 1 schützen.

Aus den Figuren 3 und 4 geht ebenfalls das Befestigungsteil 5 mit zwei U-förmigen Ausschnitten hervor, welche in etwa 90 Grad zueinander angeordnet sind. Das Befestigungsteil 5 wird in Montagestellung mit dem nach oben offenen U-förmigen Ausschnitt über einen Mitnehmer 19 mit dem Fahrstufenwählhebel 1 wirkverbunden. Der andere U-förmige Ausschnitt des Befestigungsteils 5 ist mit einem die Kippachse 7 bildenden Bolzen 18 wirkverbunden. Durch diese Anbindungen wird erreicht, dass das Befestigungsteil 5 die Kippbewegung des Fahrstufenwählhebels 1 in eine Linearbewegung des Käfigs 6 mit dem Magneten 2 umsetzt. Das Befestigungsteil 5 ist beweglich am Fahrstufenwählhebel 1 angelenkt.

Fig. 3 zeigt die Position des Fahrstufenwählhebels 1 für das Ändern der Schaltstufen in der Schaltgassenfunktion. In Fig. 4 ist die Position des Wählhebels 1 in der Tippgassenfunktion für das Herauf- und Herunterschalten der Gänge dargestellt.

Eine Bewegung des Wählhebels 1 um die Kippachse 7 bewirkt eine Drehung des Befestigungsteils 5 um diese Achse 7, so dass resultierend der am Befestigungsteil 5 angeordnete Käfig 6 in der Linearführung 4 linear bewegt wird. Dadurch wird der Abstand des Magneten 2 zum Hallsensor 3 variiert, wodurch eine präzise Bestimmung der Position des Fahrstufenwählhebels 1 möglich ist.

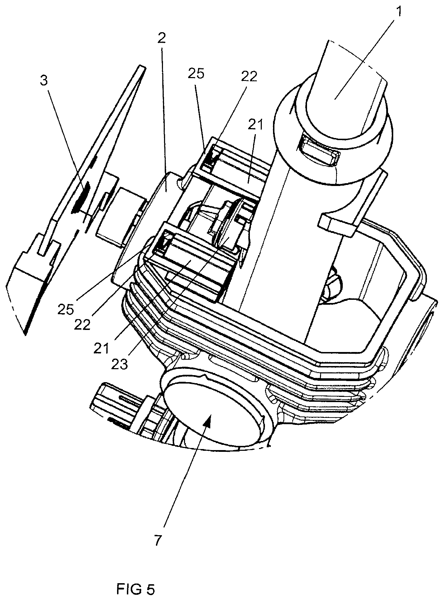

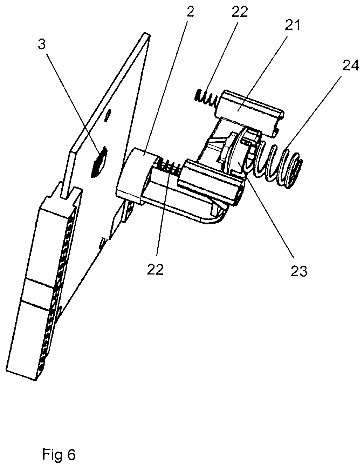

Figur 5 und Figur 6 zeigen ein alternatives Ausführungsbeispiel der Erfindung. Der Magnet 2 ist an einem Schlitten 21 angeordnet, welcher in einer Linearführung 25 der Vorrichtung 10 verschiebbar geführt ist. Der Schlitten 21 ist über einen durch eine Feder 24 belasteten Nocken 23 am Fahrstufenwählhebel 21 angelenkt.

Ein Bewegen des Fahrstufenwählhebels 1 zum Auswählen einer Fahrstufe erfordert ein Kippen des Hebels 1 um die Kippachse 7. Aufgrund der Kopplung zwischen dem am Schlitten 21 angeordneten Magneten 2 über den Nocken 23 mit dem Fahrstufenwählhebel 1 wird der Magnet 2 über die Linearführung 25 des Schlittens 21 verschoben. Der Hallsensor 3 registriert diese Abstandsänderung des Magneten 2 zum Sensor 3 und die Position des Fahrstufenwählhebels 1 wird zuverlässig und präzise bestimmt.

Die in der Linearführung 25 angeordneten Federn 22 und 24 stützen den Schlitten 21 am Gehäuse der Linearführung 25 ab und schützen vor mechanischen Überbelastungen durch zu heftige bzw. unsachgemäße Bewegungen des Fahrstufenwählhebels 1.

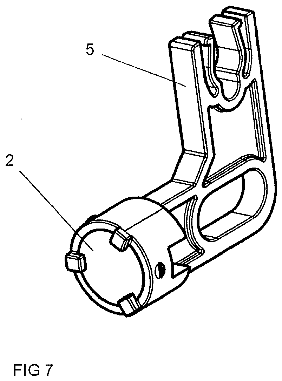

Figur 7 zeigt eine alternative Ausführungsform, wonach der Signalgeber 2 in das Betätigungselement 5 integriert ist. Beispielsweise kann der Signalgeber 2 an das Betätigungselement 5 angespritzt oder von einem Teil des Betätigungselementes 5 umspritzt sein.

### Bezugszeichenliste

- 1: Fahrstufenwählhebel
- 2: Signalgeber
- 3: Signalempfänger
- 4: Linearführung
- 5: Betätigungselement
- 6: Aufnahme bzw. Käfig
- 7: Kippachse
- 8: Anschlag
- 9: Anschlag
- 10: Vorrichtung
- 11: Zylinderachse
- 12: Schwenkachse
- 13: Normalstellung
- 14: ausgelenkte Stellung
- 15: Lager
- 16: Lager
- 17: federelastisches Element
- 18: Bolzen
- 19: Mitnehmer
- 20: Gehäuse
- 21: Schlitten
- 22: Schlittenfeder
- 23: Nocken
- 24: Nockenfeder
- 25: Linearführung

## Patentansprüche

1. Vorrichtung (10) zur Erfassung der Position eines Fahrstufenwählhebels (1) für die Wahl einer Getriebeeinstellung eines Kraftfahrzeuges, mit mindestens einem am Fahrstufenwählhebel (1) angeordneten Signalgeber (2) und mindestens einem zum Signalgeber (2) beabstandet angeordneten Signalempfänger (3), wobei die relative Lage zwischen Signalgeber (2) und Signalempfänger (3) bei verschiedenen wählbaren Fahrstufen unterschiedlich ist, wobei der Signalgeber (2) bei Kippen des Fahrstufenwählhebels (1) um eine Kippachse (7) zum Umschalten von einer Schaltgassenfunktion in eine Tippgassenfunktion oder umgekehrt im Wesentlichen nur eine translatorische Bewegung relativ zum Signalempfänger (3) ausübt, wobei für die Übertragung der Bewegung des Fahrstufenwählhebels (1) auf den in einer Linearführung (4) verschiebbar geführten Signalgeber (2) ein Betätigungselement (5) vorgesehen ist, welches am Fahrstufenwählhebel (1) außerhalb seiner Kippachse (7) angreift und der Signalgeber (2) in einer Aufnahme aufgenommen ist, welche in der Linearführung (4) verschiebbar ist, wobei die Aufnahme (6) mit dem Betätigungselement (5) wirkverbunden ist, **dadurch gekennzeichnet, dass** für eine Kippbewegung senkrecht zur Kippachse (7) des Fahrstufenwählhebels die Aufnahme bzw. der Käfig (6) für den Signalgeber (2) zylindrisch ausgebildet ist und wobei die Zylinderachse (11) mit der Schwenkachse (12) für die Kippbewegung des Fahrstufenwählhebels (1) zusammenfällt.

2. Vorrichtung (10) nach Anspruch 1 **dadurch gekennzeichnet, dass** die Linearbewegung des Signalgebers (2) durch zwei Anschläge (8, 9) begrenzt ist.

3. Vorrichtung (10) nach einem der vorherigen Ansprüche, **dadurch gekennzeichnet, dass** der Signalgeber (2) federnd in der Aufnahme (6) aufgenommen ist.

4. Vorrichtung (10) nach einem der vorherigen Ansprüche, **dadurch gekennzeichnet, dass** mindestens ein Lager (15) für die Kippbewegung des Fahrstufenwählhebels (1) senkrecht zur Kippachse (7) vorgesehen ist.

5. Vorrichtung (10) nach Anspruch 4, **dadurch gekennzeichnet, dass** das mindestens eine Lager (15) durch die Lagerung der Aufnahme (6) gebildet ist.

6. Vorrichtung (10) nach einem der vorherigen Ansprüche, **dadurch gekennzeichnet, dass** der Signalgeber (2) an das Betätigungselement (5) angespritzt oder in das Betätigungselement (5) integriert ist.

7. Vorrichtung nach einem der vorherigen Ansprüche, **dadurch gekennzeichnet, dass** die Aufnahme (6) als Käfig ausgebildet ist.

8. Kraftfahrzeug, aufweisend eine Vorrichtung (10) nach einem der vorangegangenen Ansprüche.

## Claims

1. Apparatus (10) for the detection of the position of a gear step selector lever (1) for the selection of a gear setting of a motor vehicle, with at least one signal transmitter (2) which is arranged on the gear step selector lever (1) and with at least one signal receiver (3) which is arranged spaced apart from the signal transmitter (2), the relative position between the signal transmitter (2) and the signal receiver (3) being different in the case of various selectable gear steps, the signal transmitter (2) carrying out substantially only a translational movement relative to the signal receiver (3) in the case of tilting of the gear step selector lever (1) about a tilting axis (7) in order to switch over from a shifting gate function into a touch shift gate function or vice versa, an actuating element (5) being provided for the transmission of the movement of the gear step selector lever (1) to the signal transmitter (2) which is guided displaceably in a linear guide (4), which actuating element (5) acts on the gear step selector lever (1) outside its tilting axis (7), and the signal transmitter (2) being received in a receptacle which can be displaced in the linear guide (4), the receptacle (6) being operatively connected to the actuating element (5), **characterized in that** the receptacle or the cage (6) for the signal transmitter (2) is of cylindrical configuration for a tilting movement perpendicularly with respect to the tilting axis (7) of the gear step selector lever, and the cylinder axis (11) coinciding with the pivoting axis (12) for the tilting movement of the gear step selector lever (1).

2. Apparatus (10) according the preceding claim, **characterized in that** the linear movement of the signal transmitter (2) is limited by way of two stops (8, 9).

3. Apparatus (10) according to either of the preceding claims, **characterized in that** the signal transmitter (2) is received resiliently in the receptacle (6).

4. Apparatus (10) according to one of the preceding claims, **characterized in that** at least one bearing (15) is provided for the tilting movement of the gear step selector lever (1) perpendicularly with respect to the tilting axis (7).

5. Apparatus (10) according to Claim 4, **characterized in that** the at least one bearing (15) is formed by way of the mounting of the receptacle (6).

6. Apparatus (10) according to one of the preceding claims, **characterized in that** the signal transmitter (2) is moulded onto the actuating element (5) or is integrated into the actuating element (5).

7. Apparatus according to one of the preceding claims, **characterized in that** the receptacle (6) is configured as a cage.

8. Motor vehicle, having an apparatus (10) according to one of the preceding claims.

## Revendications

1. Dispositif (10) pour détecter la position d'un levier de sélection de rapports de vitesses (1) pour la sélection d'un réglage de boîte de vitesses d'un véhicule automobile, comprenant au moins un émetteur de signaux (2) disposé au niveau du levier de sélection de rapports de vitesses (1) et au moins un récepteur de signaux (3) disposé à distance de l'émetteur de signaux (2), la position relative entre l'émetteur de signaux (2) et le récepteur de signaux (3) étant différente pour différents rapports de vitesses sélectionnables, l'émetteur de signaux (2), lors du pivotement du levier de sélection de rapports de vitesses (1) autour d'un axe de pivotement (7) pour commuter d'une fonction de voie de changement de vitesses à une fonction de voie de basculement ou inversement, effectuant essentiellement seulement un mouvement de translation par rapport au récepteur de signaux (3), un élément d'actionnement (5) étant prévu pour le transfert du mouvement du levier de sélection de rapports de vitesses (1) à l'émetteur de signaux (2) guidé de manière coulissante dans un guide linéaire (4), lequel élément d'actionnement s'engage avec le levier de sélection de rapports de vitesses (1) à l'extérieur de son axe de pivotement (7) et l'émetteur de signaux (2) étant reçu dans un logement qui peut coulisser dans le guide linéaire (4), le logement (6) étant en liaison fonctionnelle avec l'élément d'actionnement (5), **caractérisé en ce que** pour un mouvement de pivotement perpendiculairement à l'axe de pivotement (7) du levier de sélection de rapports de vitesses, le logement ou la cage (6) pour l'émetteur de signaux (2) est réalisé(e) sous forme cylindrique et l'axe de cylindre (11) coïncidant avec l'axe de rotation (12) pour le mouvement de pivotement du levier de sélection de rapports de vitesses (1).

2. Dispositif (10) selon la revendication précédentes, **caractérisé en ce que** le mouvement linéaire de l'émetteur de signaux (2) est limité par deux butées (8, 9).

3. Dispositif (10) selon l'une quelconque des revendications précédentes, **caractérisé en ce que** l'émetteur de signaux (2) est reçu de manière supportée élastiquement dans le logement (6).

4. Dispositif (10) selon l'une quelconque des revendications précédentes, **caractérisé en ce qu'**au moins un palier (15) pour le mouvement de pivotement du levier de sélection de rapports de vitesses (1) est prévu perpendiculairement à l'axe de pivotement (7).

5. Dispositif (10) selon la revendication 4, **caractérisé en ce que** l'au moins un palier (15) est formé par le support sur palier du logement (6) .

6. Dispositif (10) selon l'une quelconque des revendications précédentes, **caractérisé en ce que** l'émetteur de signaux (2) est moulé sur l'élément d'actionnement (5) ou est intégré dans l'élément d'actionnement (5).

7. Dispositif selon l'une quelconque des revendications précédentes, **caractérisé en ce que** le logement (6) est réalisé sous forme de cage.

8. Véhicule automobile présentant un dispositif (10) selon l'une quelconque des revendications précédentes.
